# EUROPEAN PATENT SPECIFICATION

(11) **EP 4 629 680 B1**
(45) Date of publication and mention of the grant of the patent: **25.11.2026**
(21) Application number: 24190588.4
(22) Date of filing: 24.07.2024
(51) Int. Cl.: H04W 12/08, H04W 12/30, H04W 12/40

(54) **SECURE ELEMENT AND OPERATING METHOD**
SICHERES ELEMENT UND BETRIEBSVERFAHREN
ÉLÉMENT SÉCURISÉ ET PROCÉDÉ DE FONCTIONNEMENT

(30) Priority: 04.04.2024 IN 202441027882
(43) Date of publication of application: 08.10.2025
(73) Proprietor: NXP B.V., 5656 AG Eindhoven (NL)
(72) Inventor: Caillaud, Cyril Harold, 5656AG Eindhoven (NL); Dharmaraj, Karthik, 5656AG Eindhoven (NL); Nitsch, Nils Frederik, 5656AG Eindhoven (NL)
(74) Representative: Krott, Michel

(56) References cited:
- EP-A1- 2 461 613
- EP-A1- 4 027 602
- US-A1- 2022 078 615
- "RSP Technical Specification", 26 May 2023, GSMA, XP002812587

## Description

### TECHNICAL FIELD

The present disclosure relates to a secure element. Furthermore, the present disclosure relates to a corresponding method of operating a secure element, and to a computer program for carrying out said method.

### BACKGROUND

Some communication devices, such as smart phones, typically contain one or more secure elements. An example of such a secure element is a so-called embedded universal integrated circuit card (eUICC), which may be an embedded functional component that implements the same functionality as a traditional, removable subscriber identity module (SIM). Accordingly, a secure element may for example be a functional component (e.g., a component primarily implemented as software) that is installed in an embedded chip, more specifically in a tamper-resistant integrated circuit having a prescribed level of security. A secure element may implement security functions, such as cryptographic functions and authentication functions. Furthermore, a profile may be stored in a secure element, in order to enable the aforementioned functionality.

EP 2 461 613 A1 describes the management of secure elements, like UICCs embedding Sim applications, these secure elements being installed, fixedly or not, in terminals, like for example mobile phones. In particular, a method is described for downloading a subscription from an operator platform to a UICC, according to which downloading is only performed if a device is authorized as indicated in a table.

EP 4 027 602 A1 describes a method and apparatus for mutual authentication between two smart security media for bundle transfer between the security media.

### SUMMARY

In accordance with a first aspect of the present disclosure, a secure element is provided, as defined in claim 1.

In one or more embodiments, the export control data comprise a binary digit indicative of whether or not the export of the profile is allowed, wherein the predefined condition is that said binary digit indicates that the export is allowed.

In one or more embodiments, the processing unit is further configured to decrement the counter value by one upon exporting the profile to the target secure element, and to transmit the decremented counter value to said target secure element along with the profile.

In one or more embodiments, the counter value is configured to be reset by an authorized party.

In one or more embodiments, the authorized party is the owner of the profile.

In one or more embodiments, the processing unit is further configured to generate an export package containing said profile if the export has been authorized.

In one or more embodiments, the processing unit is further configured to generate feedback data indicative of a result of the export of the profile.

In one or more embodiments, the secure element is an embedded universal integrated circuit card (eUICC).

In one or more embodiments, a mobile communication device comprises a secure element of the kind set forth.

In one or more embodiments, the mobile communication device further comprises the target secure element.

In accordance with a second aspect of the present disclosure, a method of operating a secure element is conceived, as defined in claim 11.

In one or more embodiments, the export control data comprise a binary digit indicative of whether or not the export of the profile is allowed, wherein the predefined condition is that said binary digit indicates that the export is allowed.

In accordance with a third aspect of the present disclosure, a computer program is provided, comprising executable instructions which, when executed by a secure element, cause said secure element to carry out a method of the kind set forth.

### DESCRIPTION OF DRAWINGS

Embodiments will be described in more detail with reference to the appended drawings.
Fig. 1 shows an illustrative embodiment of a secure element.
Fig. 2 shows an illustrative embodiment of a method of operating a secure element.
Fig. 3 shows an illustrative embodiment of a provisioning process.
Fig. 4 shows an illustrative embodiment of an export process.
Fig. 5 shows an illustrative embodiment of a counter value reset process.

### DESCRIPTION OF EMBODIMENTS

Nowadays, removable SIMs are often replaced by so-called eUICCs. This fits into the trend of developing so-called embedded SIM (eSIM) technology, which transforms the traditional plastic SIM into an electronical dataset called "profile". A profile may be regarded as a collection of resources associated with a particular user. For example, a mobile network operator (MNO) may associate the profile with said user in its network and billing systems, upon contract establishment and when sending an eSIM, respectively. Specifically, a profile may include at least one of a file system, one or more network access credentials, one or more applications and data related to or operated upon by said applications. In operation, a communication device may for example retrieve access credentials contained in such a profile, with the purpose of connecting the communication device to a cellular network.

Instead of sending a SIM to a subscriber, eSIM allows an MNO to easily download and install a profile into a secure element (e.g., an eUICC) in a connected device (e.g., a mobile phone). However, once downloaded, the profile can typically not be extracted from the secure element. In other words, a transfer of the profile to a new communication device having another secure element is usually not envisaged. Currently, the GSM Association (GSMA) is investigating the possibility of securely exporting profiles from one secure element to another. In such a scenario, the question of how a profile owner (e.g., the aforementioned MNO), can have control on the export function should also be addressed.

The current security protocol defined by the GSMA for downloading and installing eSIM profiles is defined in a "one-way-street" principle. More specifically, once a profile has been delivered (which is encrypted for a single secure element only), the requirement is that the secure element will never expose any data from that profile unless needed and defined by the relevant telecommunication specifications (e.g., ETSI and 3GPP specifications). As a consequence, the scenario of removing a SIM from one device and put it into another device, and by that keeping all modifications done on the SIM so far, cannot be realized in an eSIM ecosystem. For this reason, a case study is performed on exporting profiles from secure elements of the kind set forth above. For example, it should become possible to transfer a snapshot of an eSIM profile from one eUICC to another eUICC, or to an intermediate secure storage in a server.

On traditional SIM cards confidential and/or secret data owned by the subscriber (e.g., privacy-related data) or by his or her business partner (e.g., identifiers and secret keys) are never readable outside the SIM cards. Therefore, the profile owner (e.g., the MNO) may always be confident that credentials and other secret data is never exposed outside the SIM. However, introducing the technical possibility of exporting a profile raises the question how the profile export procedure can be made more secure, such that the profile is less likely to be exposed to unauthorized parties and provides a level of protection that is comparable to traditional SIM cards.

Now discussed are a secure element and a corresponding method of operating a secure element, which facilitate exporting one or more profiles, with a reduced risk that said profiles are exposed to unauthorized parties.

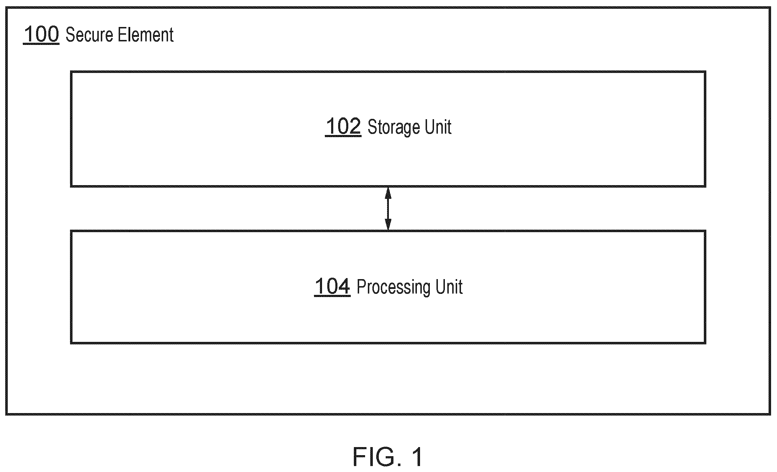

**Fig. 1** shows an illustrative embodiment of a secure element 100. The secure element 100 comprises a storage unit 102 and a processing unit 104 which are operatively coupled to each other. The storage unit 102 is configured to store a profile and to store export control data associated with said profile. Furthermore, the processing unit 104 is configured to verify whether the export control data meet a predefined condition, and to authorize an export of the profile to a target secure element, which is external to the secure element 100, if the export control data meet said predefined condition. In this way, the risk that the profile is exposed to unauthorized parties is reduced. It is noted that the term "export control data" may refer to any kind of data that may be used to control the export of the profile. Furthermore, it is noted that the target secure element (i.e., the other secure element to which the profile is to be exported) may be included in the same communication device as the secure element 100 from which the profile is exported. Alternatively, the two secure elements may be integrated into separate communication devices. Furthermore, it is noted that, although the storage unit 102 and processing unit 104 have been shown as separate units, they may also be integrated into a single physical component. Finally, it is noted that the secure element 100 may contain an interface unit (not shown) through which the profile may be transmitted to the target secure element after the export of said profile has been authorized.

In one or more embodiments, the export control data comprise a binary digit (i.e., a bit) indicative of whether or not the export of the profile is allowed, and the predefined condition is that said binary digit indicates that the export is allowed. In this way, the export of the profile may be secured in a relatively easy manner. Furthermore, in one or more embodiments, the export control data comprise a counter value, and the predefined condition is that said counter value is greater than zero. In this way, a practical yet secure implementation may be realized, according to which the number of profile exports may easily be controlled. Furthermore, the processing unit may be configured to decrement the counter value by one upon exporting the profile to the target secure element, and to transmit the decremented counter value to said target secure element along with the profile. In this way, it may be ensured that the profile is not exported more often than prescribed by the initial counter value.

In one or more embodiments, the counter value is configured to be reset by an authorized party. In this way, additional exports of the profile may be enabled, while still reducing the risk that the profile is exposed to unauthorized parties. For instance, the authorized party may be the owner of the profile. In this way, the profile owner may control the number of times the profile can be exported.

In one or more embodiments, the processing unit is further configured to generate an export package containing said profile if the export has been authorized. In this way, the profile may easily be exported to the target secure element. In one or more embodiments, the processing unit is further configured to generate feedback data indicative of a result of the export of the profile. In this way, the export of the profile may be monitored more easily. In a practical implementation, the secure element is an eUICC.

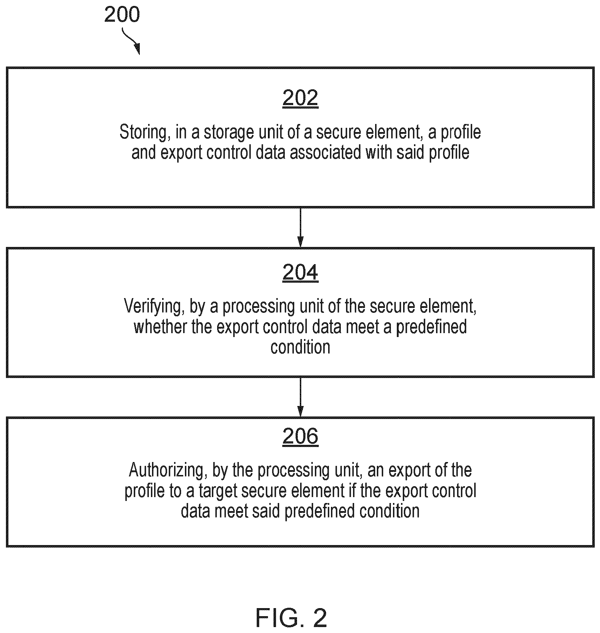

**Fig. 2** shows an illustrative embodiment of a method 200 of operating a secure element. The method 200 comprises the following steps. At 202, a profile and export control data associated with said profile are stored in a storage unit of the secure element. Furthermore, at 204, a processing unit of the secure element verifies whether the export control data meet a predefined condition. Furthermore, at 206, the processing unit authorizes an export of the profile to a target secure element if the export control data meet said predefined condition. The skilled person will appreciate that authorizing the export may be implemented in different ways. For instance, this may be done by releasing the profile from the storage unit and preparing an export package containing the profile. Subsequently, the processing unit may cause an interface unit of the secure element to transmit the export package to the target secure element. These operations may be implemented or supported by software. The method 200 facilitates reducing the risk that the profile is exposed to unauthorized parties.

In accordance with the present disclosure, in order to allow a profile owner (e.g., an MNO) to have influence on the export function of a secure element (e.g., an eUICC), meta-data may be stored along each profile downloaded onto the secure element. These meta-data, which may be referred to as "export control data", may be evaluated by the exporting secure element on each profile export request issued. The profile export request may be triggered by a human user (e.g., a device owner) or by an automated background system (i.e., through an external server or using a direct communication mechanism like Machine2Machine, M2M). The export control data may be embodied as a binary digit which indicates whether a profile expert is allowed (e.g., a flag indicating yes/no). Alternatively or in addition, the export control data may be embodied as a counter value, which may be set by the profile owner. In that case, the profile may only exported as many times as the counter value indicates. Furthermore, the exporting secure element (i.e., the source secure element) may decrement the counter value by one during the export, and transmit the decremented counter value to the target secure element along with the profile. In that case, the target secure element may store the decremented counter value as meta-data associated with the received profile. Then, the target secure element may use the decremented counter value in the same way as the source secure element, i.e. to control any subsequent export of the profile (i.e., to other secure elements). Furthermore, the counter value may be reset by the profile owner.

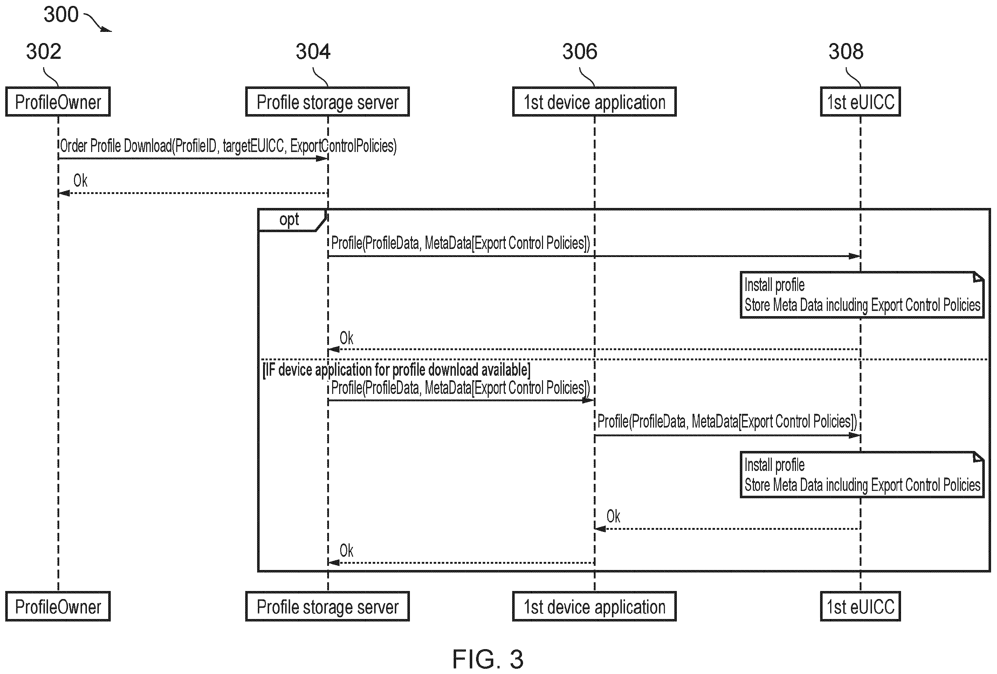

**Fig. 3** shows an illustrative embodiment of a provisioning process 300. In particular, it is shown how export control data may be provisioned to a first eUICC 308 (i.e., a source secure element), from which a profile should be exported. It is noted that the export control data are referred to as "export control policies" in Figs. 3 to 5. The profile owner 302 may download the profile to the first eUICC 308. This download may for example be performed as specified in the RSP Technical Specification, version 2.5, published by the GSMA on 26 May 2023. For example, the export control data may be downloaded from a profile storage server 304 (e.g., a Subscription Manager Data Preparation (SM-DP+) server). As part of the meta-data sent along with the profile during the profile download procedure, the export control data may be downloaded onto the 1st eUICC 308 along with other meta-data (if any). It is noted that the download may be performed through a direct communication channel between the profile storage server 304 and the first eUICC 308. Alternatively, the download may be performed using a device application 306 acting as a proxy between the profile storage server 304 and the first eUICC 308.

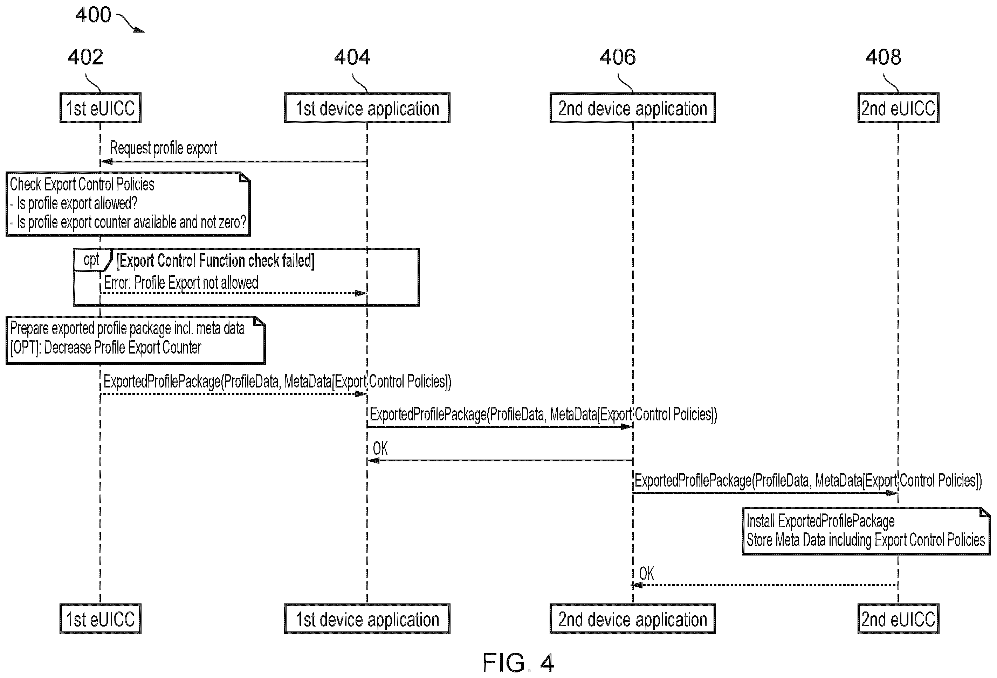

**Fig. 4** shows an illustrative embodiment of an export process 400. In particular, it is shown how the export control data provisioned as shown in Fig. 3, may be used to securely export a profile. Upon an external trigger of the profile export the first eUICC 402 checks the export control data. For example, the first eUICC 402 may check whether a binary digit indicates that the profile export is allowed. Furthermore, the first eUICC 402 may check whether a counter value is greater than zero. If one or more of these conditions are met, the first eUICC 402 may decrement the counter value (if present) by one and transmit the decremented counter value along with other meta-data (including other possible export control data) to a second eUICC 408. It is noted that the profile export may be performed with or without the support of device applications 404, 406. Fig. 4 shows a variant in which device applications 404, 406 are used to support the profile export. These device applications 404, 406 may be executed by a host processor implemented in a user device in which both the first eUICC 402 and the second eUICC 408 are embedded.

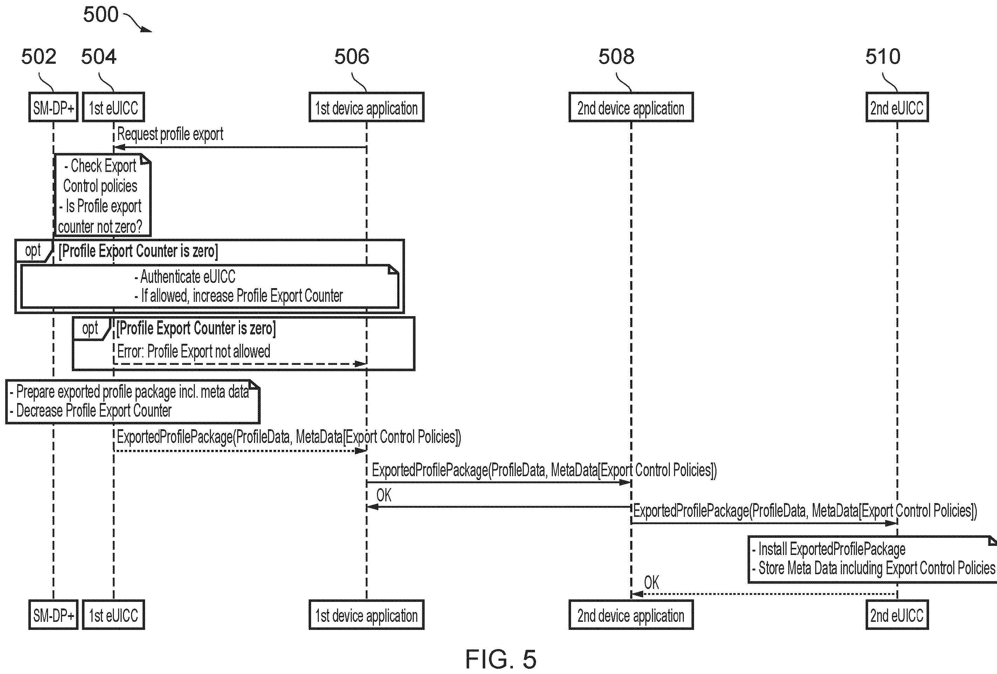

**Fig. 5** shows an illustrative embodiment of a counter value reset process 500. In particular, it is shown how the export process shown in Fig. 4 may be modified, so as to include a reset of the counter value. Similar to the process shown in Fig. 4, upon an external trigger of the profile export the first eUICC 504 checks the export control data. For example, the first eUICC 504 may check whether a binary digit indicates that the profile export is allowed. Furthermore, the first eUICC 504 checks whether a counter value is greater than zero. If the counter value is zero, then the first eUICC 504, or the user device in which it is embedded, establishes communication with a server 502 of the profile owner (e.g., SM-DP+) in order to reset the counter value. If the profile owner allows the reset of the counter value, the process 500 may continue with the export of the profile. Similar to the process shown in Fig. 4, the profile export may be performed with or without the support of device applications 506, 508. Fig. 5 shows a variant in which device applications 506, 508 are used to support the profile export. These device applications 506, 508 may be executed by a host processor implemented in a user device in which both the first eUICC 504 and the second eUICC 510 are embedded.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. **In** particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. **In** different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. **In** the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. **In** a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: secure element
- 102: storage unit
- 104: processing unit
- 200: method of operating a secure element
- 202: storing, in a storage unit of a secure element, a profile and export control data associated with said profile
- 204: verifying, by a processing unit of the secure element, whether the export control data meet a predefined condition
- 206: authorizing, by the processing unit, an export of the profile to a target secure element if the export control data meet said predefined condition
- 300: provisioning process
- 302: profile owner
- 304: profile storage server
- 306: first device application
- 308: first eUICC
- 400: export process
- 402: first eUICC
- 404: first device application
- 406: second device application
- 408: second eUICC
- 500: counter value reset process
- 502: SM-DP+
- 504: first eUICC
- 506: first device application
- 508: second device application
- 510: second eUICC

## Claims

1. A secure element, comprising:
a storage unit configured to store a profile and to store export control data associated with said profile;
a processing unit operatively coupled to the storage unit, wherein said processing unit is configured to:
verify whether the export control data meet a predefined condition;
authorize an export of the profile to a target secure element if the export control data meet said predefined condition, wherein the export control data comprise a counter value, which represents the number of times the profile is permitted to be exported, and wherein the predefined condition is that said counter value is greater than zero.

2. The secure element of claim 1, wherein the export control data comprise a binary digit indicative of whether or not the export of the profile is allowed, and wherein the predefined condition is that said binary digit indicates that the export is allowed.

3. The secure element of any preceding claim, wherein the processing unit is further configured to decrement the counter value by one upon exporting the profile to the target secure element, and to transmit the decremented counter value to said target secure element along with the profile.

4. The secure element of any preceding claim, wherein the counter value is configured to be reset by an authorized party.

5. The secure element of claim 4, wherein the authorized party is the owner of the profile.

6. The secure element of any preceding claim, wherein the processing unit is further configured to generate an export package containing said profile if the export has been authorized.

7. The secure element of any preceding claim, wherein the processing unit is further configured to generate feedback data indicative of a result of the export of the profile.

8. The secure element of any preceding claim, being an embedded universal integrated circuit card, eUICC.

9. A mobile communication device comprising the secure element of any preceding claim.

10. The mobile communication device of claim 9, further comprising the target secure element.

11. A method of operating a secure element, comprising:
storing, in a storage unit of the secure element, a profile and export control data associated with said profile;
verifying, by a processing unit of the secure element, whether the export control data meet a predefined condition;
authorizing, by the processing unit, an export of the profile to a target secure element if the export control data meet said predefined condition, wherein the export control data comprise a counter value, which represents the number of times the profile is permitted to be exported, and wherein the predefined condition is that said counter value is greater than zero.

12. The method of claim 11, wherein the export control data comprise a binary digit indicative of whether or not the export of the profile is allowed, and wherein the predefined condition is that said binary digit indicates that the export is allowed.

13. A computer program comprising executable instructions which, when executed by a secure element, cause said secure element to carry out the method of claim 11 or 12.

## Patentansprüche

1. Sicheres Element, das umfasst:
eine Speicherungseinheit, die dazu ausgelegt ist, ein Profil zu speichern und Exportsteuerdaten, die mit dem Profil assoziiert sind, zu speichern;
eine Verarbeitungseinheit, die operativ mit der Speicherungseinheit gekoppelt ist, wobei die Verarbeitungseinheit ausgelegt ist zum:
Verifizieren, ob die Exportsteuerdaten eine vordefinierte Bedingung erfüllen;
Autorisieren eines Exports des Profils an ein sicheres Zielelement, wenn die Exportsteuerdaten die vordefinierte Bedingung erfüllen, wobei die Exportsteuerdaten einen Zählerwert umfassen, der die Anzahl von Malen, die das Profil exportiert werden darf, repräsentiert, und wobei die vordefinierte Bedingung darin besteht, dass der Zählerwert größer als null ist.

2. Sicheres Element nach Anspruch 1, wobei die Exportsteuerdaten eine binäre Ziffer umfassen, die angibt, ob der Export des Profils zulässig ist oder nicht, und wobei die vordefinierte Bedingung darin besteht, dass die binäre Ziffer angibt, dass der Export zulässig ist.

3. Sicheres Element nach einem der vorhergehenden Ansprüche, wobei die Verarbeitungseinheit ferner dazu ausgelegt ist, den Zählerwert beim Exportieren des Profils an das sichere Zielelement um eins zu dekrementieren und den dekrementierten Zählerwert zusammen mit dem Profil an das sichere Zielelement zu übertragen.

4. Sicheres Element nach einem der vorhergehenden Ansprüche, wobei der Zählerwert dazu ausgelegt ist, durch eine autorisierte Partei zurückgesetzt zu werden.

5. Sicheres Element nach Anspruch 4, wobei die autorisierte Partei der Inhaber des Profils ist.

6. Sicheres Element nach einem der vorhergehenden Ansprüche, wobei die Verarbeitungseinheit ferner dazu ausgelegt ist, ein Exportpaket zu erzeugen, das das Profil enthält, wenn der Export autorisiert wurde.

7. Sicheres Element nach einem der vorhergehenden Ansprüche, wobei die Verarbeitungseinheit ferner dazu ausgelegt ist, Rückmeldungsdaten zu erzeugen, die ein Ergebnis des Exports des Profils angeben.

8. Sicheres Element nach einem der vorhergehenden Ansprüche, das eine embedded Universal Integrated Circuit Card, eUICC, ist.

9. Mobile Kommunikationsvorrichtung, die das sichere Element nach einem der vorhergehenden Ansprüche umfasst.

10. Mobile Kommunikationsvorrichtung nach Anspruch 9, die ferner das sichere Zielelement umfasst.

11. Verfahren zum Betreiben eines sicheren Elements, das umfasst:
Speichern, in einer Speicherungseinheit des sicheren Elements, eines Profils und von Exportsteuerdaten, die mit dem Profil assoziiert sind;
Verifizieren, durch eine Verarbeitungseinheit des sicheren Elements, ob die Exportsteuerdaten eine vordefinierte Bedingung erfüllen;
Autorisieren, durch die Verarbeitungseinheit, eines Exports des Profils an ein sicheres Zielelement, wenn die Exportsteuerdaten die vordefinierte Bedingung erfüllen, wobei die Exportsteuerdaten einen Zählerwert umfassen, der die Anzahl von Malen, die das Profil exportiert werden darf, repräsentiert, und wobei die vordefinierte Bedingung darin besteht, dass der Zählerwert größer als null ist.

12. Verfahren nach Anspruch 11, wobei die Exportsteuerdaten eine binäre Ziffer umfassen, die angibt, ob der Export des Profils zulässig ist oder nicht, und wobei die vordefinierte Bedingung darin besteht, dass die binäre Ziffer angibt, dass der Export zulässig ist.

13. Computerprogramm, das ausführbare Anweisungen umfasst, die, wenn sie durch ein sicheres Element ausgeführt werden, das sichere Element dazu veranlassen, das Verfahren nach Anspruch 11 oder 12 auszuführen.

## Revendications

1. Élément sécurisé comprenant :
une unité de stockage configurée pour stocker un profil et pour stocker des données de contrôle d'exportation associées audit profil :
une unité de traitement couplée de manière fonctionnelle à l'unité de stockage, où ladite unité de traitement est configurée pour :
vérifier si les données de contrôle d'exportation satisfont une condition prédéfinie ;
autoriser une exportation du profil vers un élément sécurisé cible si les données de contrôle d'exportation satisfont ladite condition prédéfinie, les données de contrôle d'exportation comprenant une valeur de compteur, qui représente le nombre de fois où le profil peut être exporté, et où la condition prédéfinie est que ladite valeur de compteur est supérieure à zéro.

2. Élément sécurisé selon la revendication 1, dans lequel les données de contrôle d'exportation comprennent un chiffre binaire indiquant si l'exportation du profil est autorisée ou non, et où la condition prédéfinie est que ledit chiffre binaire indique que l'exportation est autorisée.

3. Élément sécurisé selon l'une quelconque des revendications précédentes, dans lequel l'unité de traitement est en outre configurée pour décrémenter la valeur du compteur d'une unité lors de l'exportation du profil vers l'élément sécurisé cible, et pour transmettre la valeur du compteur décrémentée audit élément sécurisé cible en même temps que le profil.

4. Élément sécurisé selon l'une quelconque des revendications précédentes, dans lequel la valeur du compteur est configurée pour être réinitialisée par un tiers autorisé.

5. Élément sécurisé selon la revendication 4, dans lequel le tiers autorisé est le propriétaire du profil.

6. Élément sécurisé selon l'une quelconque des revendications précédentes, dans lequel l'unité de traitement est en outre configurée pour générer un paquet d'exportation contenant ledit profil si l'exportation a été autorisée.

7. Élément sécurisé selon l'une quelconque des revendications précédentes, dans lequel l'unité de traitement est en outre configurée pour générer des données de rétroaction indicatives d'un résultat de l'exportation du profil.

8. Élément sécurisé selon l'une quelconque des revendications précédentes, l'élément sécurisé étant une carte à circuit intégré universel intégré, eUICC.

9. Dispositif de communication mobile comprenant l'élément sécurisé selon l'une quelconque des revendications précédentes.

10. Dispositif de communication mobile selon la revendication 9, comprenant en outre l'élément sécurisé cible.

11. Procédé d'exploitation d'un élément sécurisé, le procédé comprenant les étapes suivantes :
stocker, dans une unité de stockage de l'élément sécurisé, un profil et des données de contrôle d'exportation associées audit profil :
vérifier, par une unité de traitement de l'élément sécurisé, si les données de contrôle d'exportation satisfont une condition prédéfinie ;
autoriser, par l'unité de traitement, une exportation du profil vers un élément sécurisé cible si les données de contrôle d'exportation satisfont ladite condition prédéfinie, les données de contrôle d'exportation comprenant une valeur de compteur, qui représente le nombre de fois où le profil peut être exporté, et où la condition prédéfinie est que ladite valeur de compteur est supérieure à zéro.

12. Procédé selon la revendication 11, dans lequel les données de contrôle d'exportation comprennent un chiffre binaire indiquant si l'exportation du profil est autorisée ou non, et où la condition prédéfinie est que ledit chiffre binaire indique que l'exportation est autorisée.

13. Programme informatique comprenant des instructions exécutables qui, lorsqu'elles sont exécutées par un élément sécurisé, amènent ledit élément sécurisé à mettre en œuvre le procédé selon la revendication 11 ou la revendication 12.
